# FASCICULE DE BREVET EUROPEEN

(11) **EP 1 974 534 B1**
(45) Date de publication et mention de la délivrance du brevet: **07.03.2018**
(21) Numéro de dépôt: 07712652.2
(22) Date de dépôt: 02.01.2007
(51) Int. Cl.: H04M 3/42

(54) **PROCÉDÉ ET DISPOSITIF DE GESTION DES COMMUNICATIONS PERSONNELLES D'AU MOINS UN UTILISATEUR**
VERFAHREN UND VORRICHTUNG ZUR VERWALTUNG VON PERSONALKOMMUNIKATIONEN VON MINDESTENS EINEM BENUTZER
METHOD AND DEVICE FOR MANAGING PERSONAL COMMUNICATIONS OF AT LEAST ONE USER

(30) Priorité: 30.12.2005 FR 0554147; 30.12.2005 FR 0554150
(43) Date de publication de la demande: 01.10.2008
(73) Titulaire: Orange, 75015 Paris (FR)
(72) Inventeur: BEKER, Sergio, F-06410 Biot (FR); BOURDAIS, François, 92130 ISSY-LES-MOULINEAUX (FR)
(74) Mandataire: Delumeau, François Guy
(86) Numéro de dépôt international: PCT/FR2007/050600
(87) Numéro de publication internationale: WO 2007/077402

(56) Documents cités:
- EP-A2- 1 211 877
- WO-A-98/19438
- US-A- 5 742 905

## Description

### Arrière-plan de l'invention

Le domaine de l'invention est celui des systèmes de gestion des communications personnelles d'un ou plusieurs utilisateurs.

L'invention trouve une application privilégiée mais non limitative dans un contexte résidentiel dans lequel des utilisateurs partagent des terminaux de différents types pour communiquer avec des terminaux distants sur un ou plusieurs réseaux de télécommunication.

Dans cette invention, les terminaux locaux et les terminaux distants peuvent être de tout type, ces terminaux pouvant notamment être constitués par des téléphones analogiques, des téléphones mobiles conformes à la norme GSM ou GPRS, des systèmes de visioconférence mettant en oeuvre le protocole H323, des terminaux de voix sur IP (Internet Protocol) et des assistants personnels (PDA).

De façon connue, l'avènement de la téléphonie mobile, et l'augmentation des débits disponibles sur le réseau Internet ont accéléré le développement de nombreux services de télécommunication.

Dans ce document, un « service de télécommunication » est à mettre en relation avec un groupe fermé d'utilisateurs aptes à communiquer entre eux en utilisant notamment un ensemble de protocoles de communication et des procédures d'enregistrement communes.

On parlera ainsi, comme de façon connue et non limitative:
- de « service de téléphonie sur le réseau téléphonique commuté», dénommé ci-après « service RTC »,
- de « service GSM » ou de « service GPRS »,
- de « service de voix sur IP (VoIP pour "Voice over IP" en anglais) », et
- de « service de messagerie instantanée (IM pour "Instant Messaging" en anglais) ».

Pour accéder à un service de communication particulier, chaque destinataire potentiel d'un appel, appelé ici contact, doit posséder un « compte utilisateur » associé à ce service. Ce compte est généralement attribué par l'opérateur du service au moment de l'abonnement de l'utilisateur, et fermé ou désactivé par l'opérateur suite à la résiliation de cet abonnement.

Le contact ou compte utilisateur est associé à une ou plusieurs personnes physiques.

Il est identifié par un nom, qui lorsque le compte utilisateur est propre à une seule personne physique, est usuellement le nom et/ou le prénom de cette personne.

Un tel compte comporte au moins un identifiant permettant d'identifier le serveur ou le terminal adressé par l'appel et au moyen duquel un contact peut être joint. Il comporte aussi optionnellement un mot de passe, et éventuellement d'autres attributs de définition du service, par exemple des conditions tarifaires et de bande passante définies au moment de l'abonnement.

Dans le cas du service RTC ou d'un service de téléphonie mobile, l'identifiant d'un compte utilisateur est simplement constitué par un numéro de téléphone.

Dans le cas d'un service de messagerie instantanée, cet identifiant est constitué par une adresse de messagerie.

Dans le cas d'un service voix sur IP, cet identifiant est constitué par une chaîne de caractères choisie par l'utilisateur, l'unicité de cet identifiant au sein du groupe fermé d'utilisateurs étant vérifiée par l'opérateur au moment de l'inscription au service.

Les différents services de communication mettent en oeuvre différents types de communication. Pour chaque type de communication, un terminal doit posséder certaines capacités techniques minimales prédéfinies pour pouvoir établir une liaison de communication via ce service de communication.

Par capacités d'un terminal, on entend ici l'ensemble des paramètres déterminant les possibilités du terminal relativement à l'établissement de sessions de communication. Ces paramètres définissent notamment:
- les protocoles d'établissement de communication supportés (H320, H323, SIP, GSM, RTC, ...),
- les algorithmes d'encodage et/ou de décodage de flux audio et/ou vidéo supportés,
- les médias de télécommunication proposés par le terminal: audio seulement, vidéo seulement (temps réel, streaming, etc), audio et vidéo, etc,
- les caractéristiques de traitement des flux: temps de latence minimum requis par le réseau, débits supportés, perte de paquets toléré, vitesse de connexion, etc.

A titre d'exemple, on distinguera à un premier niveau, les trois types de communication « Texte », « Voix » et « Vidéo », chacun de ces types nécessitant des capacités spécifiques au niveau des terminaux.

A un deuxième niveau, le traitement temps réel/asynchrone des messages textuels impose des contraintes au niveau des terminaux de sorte qu'il est avantageux de définir les deux types de communication « SMS » et « Messagerie Instantanée », ci-après « IM ».

Sur la base des exemples de services mentionnés plus haut:
- le service RTC est un service supportant des communications de type "voix" ,
- le service GPRS est un service supportant des communications de type "voix" ou "texte",
- un service de messagerie instantanée est un service supportant, selon le cas, soit uniquement des communications de type "texte", soit également des communications de type "voix" ou "vidéo".

L'homme du métier comprendra que cette notion de « type de communication » est susceptible d'évoluer avec les futures générations de terminaux. A titre d'exemple, on considérera ici que les écrans LCD disponibles à ce jour sont tous capables d'afficher de la couleur, et qu'il est juste nécessaire de définir le type de communication « vidéo », alors que quelques années auparavant il aurait été nécessaire de définir des types « vidéo niveaux de gris » et « vidéo couleur ».

La prolifération des nouveaux services de télécommunication mentionnée ci-dessus s'accompagne, notamment dans le contexte résidentiel, d'une explosion du nombre de terminaux (téléphones fixes, téléphones mobiles, ordinateur de bureau, assistants personnels, ...) accessibles et partagés par les utilisateurs.

Dans le contexte actuel, l'installation et la gestion des comptes d'utilisateurs pour accéder aux différents services de communication à partir de cette pluralité de terminaux devient excessivement complexe.

Le document EP 1211877A2 datant du 5 juin 2002 divulgue un dispositif de télécommunication destiné à transférer des messages entre des utilisateurs, ce dispositif comportant une base de données contenant des informations relatives notamment aux utilisateurs et aux terminaux associés.

### Objet et résumé de l'invention

La présente invention a pour but principal de résoudre les inconvénients précités, en proposant un dispositif de gestion d'appel permettant de simplifier la mise en oeuvre et la gestion de différents services de communication pour les utilisateurs de ce dispositif.

Plus précisément l'invention concerne un dispositif de gestion d'appels pour le compte d'une pluralité de terminaux locaux tel que définit par la revendication 1. Comme il est usuel de le faire, un appel est dit « sortant » s'il est émis par un terminal local, et « entrant » s'il est destiné à un terminal local.

Corrélativement, l'invention concerne un procédé de gestion d'appels pour le compte d'une pluralité de terminaux locaux tel que définit par la revendication 9. Le dispositif de gestion d'appels peut être intégré dans une passerelle ou un serveur placé en coupure de flux entre les terminaux locaux et le réseau de communication, et jouant le rôle de proxy de communication entre les terminaux locaux et le ou les terminaux distants. L'invention concerne aussi un serveur de type proxy comportant un dispositif de gestion d'appel conforme à l'invention.

Le dispositif de gestion d'appels selon l'invention comporte des interfaces de communication avec les terminaux locaux, des moyens de sélection de service et/ou de terminal, des moyens d'établissement de session, des modules de communication adaptés à mettre en oeuvre chacun des services de communication avec les clients équivalents des terminaux distants amenés à communiquer avec le dispositif, et des moyens de routage des données et/ou flux de données entre les interfaces de communication d'une part et les modules de communication d'autre part.

La liaison de communication établie entre le terminal local et le terminal distant par le module de communication du dispositif de gestion d'appel selon l'invention comporte deux portions, à savoir :
- une portion entre le terminal local et le dispositif de gestion d'appel ;et
- une portion entre ce dispositif et le terminal distant.

Le dispositif de gestion d'appel sert donc de relais de communication entre le terminal local et le terminal distant.

L'invention permet avantageusement de simplifier l'architecture matérielle et logicielle des terminaux locaux puisque ceux-ci utilisent, pour communiquer avec le dispositif de gestion d'appel selon l'invention, dispositif qui forme un proxy de communication pour les terminaux locaux.

De préférence, la partie de la liaison de communication entre le dispositif selon l'invention et un terminal local, utilise un protocole de signalisation unique, indépendant du service de communication et donc du module de communication associé via lequel cette liaison est établie, ainsi qu'un protocole prédéfini de transport de données. Le protocole de transport de données est compatible avec le protocole de signalisation utilisé, et, de préférence, générique et propre à chaque type de communication parmi les types de base suivants: voix, vidéo, texte.

En conséquence, il suffit qu'un terminal soit apte à communiquer avec le dispositif selon l'invention au moyen du protocole de signalisation retenu et d'un protocole de transport adapté au type de service de communication à mettre en oeuvre, pour que, suite à l'ajout dans le dispositif selon l'invention d'un nouveau module client de communication associé à un nouveau service de communication, ce terminal puisse recevoir ou émettre un appel conforme à ce nouveau service, et ce, sans qu'aucune opération de configuration soit nécessaire au niveau du terminal. A titre d'exemple, un terminal local, apte à communiquer avec le dispositif selon l'invention au moyen d'un protocole de transport générique adapté à la mise en oeuvre d'un service de communication de type "messagerie instantanée", est apte à communiquer avec différents modules clients de communication associés à différents services de messagerie instantanée. Il est donc apte à recevoir des communications de type messagerie instantanée des différents modules avec un module de communication local unique.

De préférence, le dispositif de gestion selon l'invention comporte des moyens de conversion pour convertir des premières données conformes au protocole de transport générique propre à un type de communication en des deuxièmes données conformes à un protocole de communication particulier du même type utilisé pour un service de communication donné ou vice versa.

Dans le cas de l'exemple précédent, ces moyens assurent la conversion entre le protocole de transport générique de type « Messagerie Instantanée », et un ou plusieurs protocoles de messagerie instantanée particuliers correspondant au(x) service(x) mis en oeuvre par les modules clients associés du dispositif.

En complément, du fait de la gestion centralisée des appels mise en oeuvre par le dispositif selon l'invention, notamment de la gestion centralisée du routage des appels entre les modules clients de communication et les interfaces avec les terminaux, différentes fonctions de gestion d'appels, usuellement mises en oeuvre dans les terminaux locaux, peuvent être déportées sur le dispositif central de gestion d'appel conforme à l'invention. Il s'agit notamment des fonctions de gestion de liste de contacts et les fonctions de gestion d'état de disponibilité des utilisateurs et des terminaux. Il en résulte que ces listes de contacts et informations d'état de disponibilité sont gérés indépendamment du type d'appel entrant ou sortant (messagerie instantanée ou autre) et du terminal sur lequel l'utilisateur est connecté. La configuration du terminal local est simplifiée et ces informations sont gérées de manière centralisée et unifiée. En particulier, il n'est plus nécessaire de configurer chaque terminal local au moyen de listes de contact, que ces listes soient propres à un service ou à un utilisateur.

Le module de communication local du terminal local est un module client de communication simplifié, par rapport à un module client qui serait installé sur un terminal autonome, à savoir sur un terminal qui recevrait et émettrait directement des appels, sans passer par le dispositif de gestion d'appels selon l'invention. En ce sens, le module client simplifié est appelé "client léger".

Le module de communication du terminal est capable de recevoir et émettre des données de signalisation ou des messages dans un protocole de signalisation prédéfini, unique et indépendant du service de communication sélectionné, par exemple le protocole SIP, ainsi que de recevoir ou émettre des flux de données brutes, de type "voix" ou "vidéo" conformément aux protocoles de transports de données, compatibles avec le protocole SIP.

Ainsi, les données de signalisation entrantes sont converties dans le dispositif pour être conformes au protocole de signalisation SIP, avant acheminement vers les terminaux des utilisateurs, les flux de données audio, vidéo ou texte, n'étant convertis que s'ils sont dans un protocole qui n'est pas compatible avec le protocole de signalisation.

Par exemple, si le dispositif de gestion d'appels reçoit un appel entrant pour établir une session de service de messagerie instantanée, il réceptionne le message via son client de messagerie instantanée puis construit un message SIP avec la méthode MESSAGE (RFC3428 http://www.ietf.org/rfc/rfc3428.txt) et achemine ce message SIP vers un ou plusieurs terminaux utilisateurs.

Pour plus de renseignements sur le protocole de signalisation SIP, l'homme du métier pourra se reporter au document RFC 3261 de l'IETF (Internet Engineering Task Force).

En variante, tout autre protocole de communication peut être utilisé entre le dispositif selon l'invention et les terminaux locaux, notamment le protocole de signalisation utilisé dans la suite protocolaire H323.

Les flux de données sont donc échangés entre le terminal émetteur de l'appel et le terminal destinataire de l'appel avec un transit au niveau du dispositif de gestion d'appels.

Le module de communication client, propre à un service, qui est installé dans un dispositif de gestion d'appels selon l'invention, est apte à gérer une session de communication pour chaque utilisateur connecté à ce dispositif.

Selon un mode de réalisation, le dispositif de gestion selon l'invention comprend des moyens de sélection de service prévus pour, dans le cas d'un appel sortant, sélectionner, en fonction d'une règle de sélection de service, un service de communication au moyen duquel un contact est joignable.

De même, selon un autre mode de réalisation, le dispositif comprend des moyens de sélection de terminal prévus pour, dans le cas d'un appel entrant, sélectionner en fonction d'une règle de sélection de terminal, au moins un terminal local au moyen duquel un utilisateur associé à un contact est joignable.

Dans ce document, dire que « le contact est joignable » au moyen d'un service sous-entend que le ou les utilisateurs associés à ce contact se sont enregistrés auprès d'un prestataire de service pour accéder à ce service, qu'ils possèdent un compte utilisateur associé à ce service, et qu'ils sont donc susceptibles d'être joints au moyen d'un terminal capable de mettre en oeuvre une liaison de communication conforme à ce service. Cela ne signifie pas nécessairement qu'il est présent et/ou disponible à un instant donné pour être effectivement joint via ce service. A titre d'exemple, on considérera qu'une personne est joignable par téléphone via le service RTC dés lors qu'elle est abonnée à ce service, même si elle n'est pas présente à proximité de son téléphone, ou que sa ligne est occupée ou en dérangement.

Les moyens de sélection de service, sont de préférence également prévus pour, dans le cas d'un appel sortant, sélectionner un service en fonction d'au moins un critère choisi parmi un critère de coût et un critère de disponibilité d'un contact utilisateur dudit terminal distant.

Les moyens de sélection de terminal sont de préférence également prévus pour sélectionner, dans le cas d'un appel entrant, un terminal en fonction d'une règle de sélection de terminal prenant en compte des données relatives aux capacités que possèdent lesdits terminaux locaux pour la mise en oeuvre de services de communication. Ainsi, chaque terminal local qui a les capacités requises pour la mise en oeuvre des types de communication d'un service particulier peut accéder à ce service grâce à un module de communication intégré dans le terminal, commun aux différents types de service et de communication possibles, sans qu'il soit nécessaire d'installer un compte utilisateur, ni un client propre à ce service dans chacun des terminaux.

Dans un mode de réalisation particulier, la règle de sélection de terminal utilise au moins un critère parmi un critère de disponibilité desdits terminaux locaux et un critère de disponibilité des utilisateurs desdits terminaux locaux.

Dans un mode particulier de réalisation, le dispositif de gestion selon l'invention comporte des moyens adaptés à envoyer, dans le cas d'un appel entrant, un message de notification à un ou à chacun des terminaux sélectionnés, les moyens de routage sélectionnant effectivement le ou les terminaux locaux ayant répondu positivement à cette notification.

Dans un mode de réalisation particulier, le message de notification est envoyé aux terminaux locaux, selon un ordre établi en fonction d'une règle de préférence.

De préférence, la règle de sélection de service utilise des critères de priorité entre plusieurs services de communication au moyen desquels le contact est joignable.

Dans un mode préféré de réalisation, les différentes étapes du procédé de gestion d'appels selon l'invention sont déterminées par des instructions de programmes d'ordinateurs.

En conséquence, l'invention vise aussi un programme d'ordinateur sur un support d'informations, ce programme étant susceptible d'être mis en oeuvre dans un dispositif de gestion ou plus généralement dans un ordinateur, ce programme comportant des instructions adaptées à la mise en oeuvre des étapes d'un procédé de gestion des appels sortants et/ou les différentes étapes du procédé de gestion des appels entrants tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention concerne aussi un terminal comprenant :
- des moyens pour recevoir d'un dispositif de gestion d'appel une notification en vue de l'établissement d'une liaison de communication conforme à un service de communication entre ledit terminal et un terminal distant émetteur d'un appel;
- des moyens pour envoyer audit dispositif de gestion d'appel une requête d'appel sortant comportant une indication relative à au moins un contact sélectionné et à un service de communication, en vue de l'établissement via ledit dispositif d'une liaison de communication entre ledit terminal local et un terminal distant destinataire au moyen duquel ledit contact est joignable au moyen d'un service de communication correspondant à l'indication fournie;
- un module de communication pour établir avec un terminal distant une liaison de communication conforme à un service de communication à travers un module client de communication du dispositif de gestion d'appels.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, dans son environnement, un serveur proxy comprenant un dispositif selon l'invention dans un mode préféré de réalisation ; et
- la figure 2 représente, sous forme d'organigramme, les principales étapes d'un procédé de gestion de communication conforme à l'invention dans un mode préféré de réalisation.

### Description détaillée d'un mode de réalisation

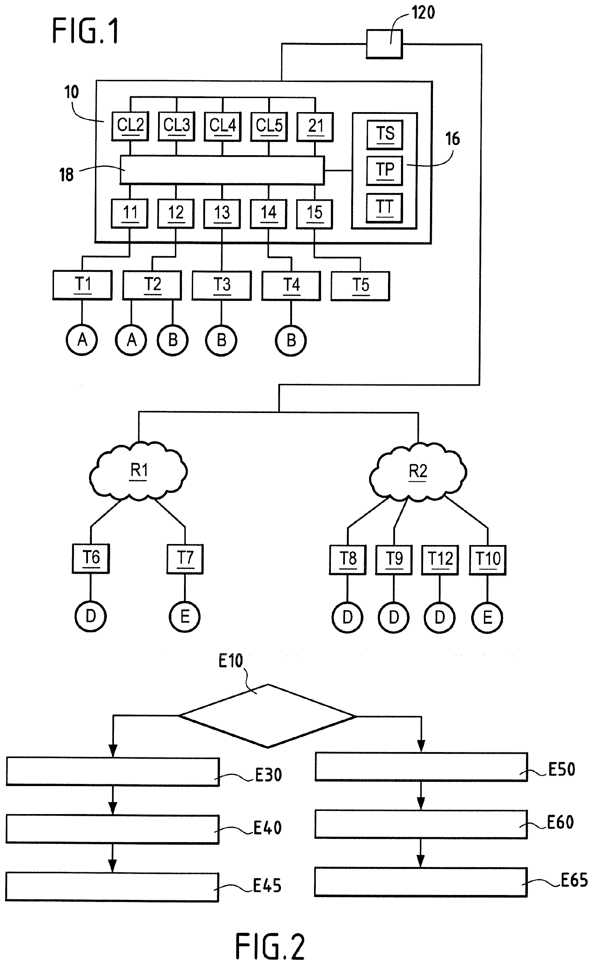

La **figure 1** représente un serveur proxy 10. Ce serveur proxy 10 comporte un dispositif de gestion d'appels selon l'invention.

Ce serveur proxy 10 est relié au réseau téléphonique commuté R1 et au réseau Internet R2, via un modem ADSL 120.

Dans l'exemple décrit ici, nous noterons A et B deux utilisateurs du serveur proxy 10.

Nous supposerons que le serveur proxy 10 offre cinq services de communication aux utilisateurs A et B :
- S1 : service de téléphonie sur RTC ;
- S2 : service de voix sur IP ;
- S3 : premier service de messagerie instantanée ;
- S4 : deuxième service de messagerie instantanée ; et
- S5 : service GSM.

Dans cet exemple, l'utilisateur A est identifié sur deux terminaux T1, T2 et l'utilisateur B sur trois terminaux T2, T3, T4.

Ces terminaux sont respectivement :
- un assistant personnel T1 ;
- un dispositif T2 de voix sur IP ;
- un système de visioconférence T3 ; et
- un ordinateur personnel T4 .

Les utilisateurs A Et B sont aussi utilisateurs d'un téléphone analogique T5 adapté au RTC R1.

Dans l'exemple décrit ici, chacun des quatre terminaux T1 à T4 est adapté à mettre en oeuvre un protocole de communication de type IP (Internet Protocol). Nous supposerons dans cet exemple que les adresses Internet des terminaux T1 à T4 sont respectivement @T1, @T2, @T3 et @T4.

Nous supposerons dans cet exemple que les utilisateurs A et B ont deux contacts D et E qui possèdent des téléphones analogiques T6 et T7 des contacts D et E connectés au réseau téléphonique commuté R1.

Connectés au réseau Internet R2, nous avons représenté :
- un terminal T8 du contact D adapté à mettre en oeuvre le service S2 de voix sur IP ;
- un terminal T9 du contact D adapté à mettre en oeuvre le premier service S3 de messagerie instantanée ;
- un terminal T10 du contact E adapté à mettre en oeuvre le service S2 de voix sur IP ; et
- un terminal GSM T12 de l'utilisateur D.

Ce dispositif comporte des interfaces de communication 11 à 14 avec les terminaux locaux T1 à T4. Ces interfaces de communication comportent des moyens matériels (carte réseau, connectique, émetteurs/récepteurs) et logiciels (pilotes) adaptés à chacun des terminaux. Ils peuvent par exemple être constitués par des moyens de conformes aux normes Ethernet ou Wifi telle que définie par l'IEEE sous le nom 802.11.

Dans l'exemple décrit ici, ces interfaces de communication 11 à 14 sont adaptées à communiquer avec un module de communication, dit client léger des terminaux T1 à T4 conformément au protocole SIP.

Le dispositif de gestion d'appels du serveur proxy 10 comporte une pluralité de modules de communication CL2-CL5, chaque module étant apte à établir avec un terminal distant une liaison de communication, conforme à un service de communication via un réseau de communication.

En ce qui concerne le transport des données brutes, le module de communication (client léger) des terminaux T1 à T4 communique avec le serveur proxy en utilisant un protocole de transport générique propre à chaque type de communication supporté par chaque terminal.

De manière connue, la liaison de communication établie entre un des terminaux locaux T1 à T4 et un terminal distant T6 est soit une liaison établie pour toute la durée d'une communication lorsqu'il s'agit d'une communication de type voix et/ou vidéo, par exemple une communication téléphonique ou visioconférence, soit établie de manière ponctuelle pour permettre un envoi de messages ou données, lorsqu'il s'agit d'une communication type texte (envoi de SMS, messagerie instantanée, messagerie électronique, etc).

Dans le contexte de l'invention, la liaison de communication établie entre un des terminaux locaux T1 à T4 et un terminal distant T6 ou T7 accessible via le réseau R1 ou R2, comporte deux portions de liaison, à savoir :
- une première portion entre le terminal local et le module de communication considérés dans laquelle on utilise un protocole de signalisation prédéfini et un protocole de transport générique ; et
- une deuxième portion entre ce module de communication et le terminal distant, dans laquelle on utilise le protocole de communication correspondant au service de communication associé au module de communication considéré.

Le module de communication considéré joue ici le rôle de relais de communication entre le module de communication (client léger) du terminal T1 à T4 et le terminal distant T6 ou T7, dans la mesure où les données et/ou flux de communication échangés via cette liaison de communication transitent au niveau du serveur proxy par le module de communication du dispositif.

Aussi, en ce qui concerne les données utiles (audio, vidéo, texte ou messages), le dispositif de gestion des appels comporte des moyens de conversion pour convertir les flux et données utiles, reçus par un module client de communication du dispositif de gestion, conformes à un premier protocole de communication, en flux et données conformes au protocole de transport générique propre au type de communication visé. Il en va de même pour les flux et données de signalisation reçus par le module client de communication du dispositif de gestion qui sont convertis en flux et données de signalisation conformes au protocole de signalisation utilisé entre le terminal local et le dispositif de gestion.

De manière symétrique, le dispositif de gestion des appels comporte des moyens de conversion pour convertir les données et/ou flux de données utiles ou de signalisation reçus via une interface de communication associée à un terminal, données qui sont conformes à un protocole prédéfini utilisé entre le terminal local et le dispositif, en données et/ou flux de données conformes à un deuxième protocole propre au service de communication associé au module de communication destinataire, ces dernières données étant ensuite transmises à ce module de communication.

De préférence toutes les données de signalisation échangées envoyées entre un terminal et le dispositif selon l'invention sont échangées conformément au protocole SIP. Les autres données ou flux de données (données brutes, audio, vidéo, ...) ne sont converties que si leur format ou leur protocole n'est pas compatible avec une signalisation via le protocole SIP.

Les différents modules de communication sont les suivants:
- un module de communication client, dit CL2 adapté à mettre en oeuvre le service S2 de voix sur IP, et notamment à établir une session avec un terminal distant permettant l'accès à ce service ;
- un module de communication client, dit CL3 adapté à mettre en oeuvre le premier service S3 de messagerie instantanée et notamment à établir une session avec un terminal distant permettant l'accès à ce service ;
- un module de communication client, dit CL4 adapté à mettre en oeuvre le deuxième service S4 de messagerie instantanée et notamment à établir une session avec un terminal distant permettant l'accès à ce service ; et
- un module de communication client, dit CL5 adapté à mettre en oeuvre le service GSM S5 et notamment à établir une session avec un terminal distant permettant l'accès à ce service.

Le dispositif de gestion d'appels comporte aussi une interface de connexion, sous la forme d'une entrée 15 de type RJ11 à laquelle peut être connectée le téléphone analogique RTC T5, et une interface 21 vers le réseau téléphonique commuté, de manière à permettre l'établissement d'une session entre le téléphone analogique T5 et un autre téléphone analogique connecté au réseau RTC. Dans l'exemple décrit ici, le port associé à cette entrée RJ11 est noté @T5.

Le dispositif de gestion des appels comprend une couche fonctionnelle réalisée sous la forme d'un middleware et permettant l'interfaçage entre les modules de communication CL2 à CL5 et 21 d'une part, et les interfaces 11 à 15 de communication d'autre part.

Chaque module client CL2 à CL5 et 21 remplit les mêmes fonctionnalités qu'un module client installé sur un terminal autonome, à savoir un terminal qui recevrait et émettrait directement les appels, sans passer par le dispositif de gestion selon l'invention.

Dans le contexte de l'invention, chaque module client du dispositif de gestion d'appels communique et coopère en outre avec le middleware pour la mise en oeuvre, au niveau du dispositif de gestion d'appels, des fonctionnalités suivantes:
- la gestion des fonctionnalités d'enregistrement vis-à-vis du service de communication associé à chacun des modules de communication du dispositif,
- la gestion de l'état de disponibilité de chaque terminal et/ou de chaque utilisateur via le service de communication associé,
- la gestion de listes de contacts par utilisateur et par service de communication, et de listes de contacts globales par utilisateur,
- la gestion des communications entrantes et sortantes.

Le middleware 18 quant à lui gère et enregistre de manière centralisée des listes de contact ainsi que des informations relatives à l'état de disponibilité des utilisateurs sur chacun des terminaux, pour chacun des services de communication et à l'état de disponibilité des terminaux.

Le middleware 18 participe également aux procédures d'enregistrement auprès de serveurs d'enregistrement lors de la création d'un compte utilisateur permettant l'accès à un service de communication. Il enregistre des données de compte utilisateur pour chaque couple utilisateur / service de communication, pour lequel un compte utilisateur a été créé.

En outre le middleware 18 est responsable de la gestion centralisée des communications entrantes et sortantes. Il gère les stratégies d'émission de notification vers les terminaux et le traitement des réponses ou non-réponses. Il dispose d'informations relatives aux capacités des différents terminaux à mettre en oeuvre un service de communication. Il met en oeuvre des règles de sélection de service et de terminal, notamment en fonction de préférences des utilisateurs des terminaux T1 à T5.

Le middleware 18 a également une fonction de routage des appels entrants et sortants. Dans le cas d'un appel entrant, le middleware sélectionne le terminal vers lequel l'appel entrant doit être acheminé et redirige l'appel vers l'interface de communication avec ce terminal. Dans le cas d'un appel sortant, le middleware sélectionne un service de communication et redirige l'appel vers le module client de communication associé au service de communication sélectionné pour l'établissement de la communication. Le processus sera décrit plus en détail ci-après.

En complément de sa fonction de routage des appels, le middleware 18 est adapté à effectuer une conversion entre le protocole SIP et chacun des protocoles mis en oeuvre par les clients de communication CL2 à CL5 ou la conversion inverse.

Le middleware 18 est adapté à établir une communication utilisant le protocole SIP, pour ce qui est de la signalisation, avec le client léger des terminaux T1 à T4. Il est adapté à obtenir de chacun des clients CL2 à CL5 des données ou un flux de données utiles (message vocal, texte, vidéo, ...) émis par ce client, et à transmettre ces données au client léger en utilisant les protocoles de transport génériques.

Il est également adapté à obtenir de chacun des clients légers des terminaux T1 à T4, via les interfaces de communication 11 à 14, des données ou un flux de données émis par le client léger et à convertir ce flux en flux conforme au protocole ou aux protocoles utilisés par le module client CL2 à CL5 vers lequel ce flux est redirigé.

Les services de communication S1 à S5 mettent en oeuvre différents types de communication. Chacun des terminaux T1 à T5 ne peut mettre en oeuvre un service de communication ou un type de communication que s'il possède les capacités nécessaires à cette mise en oeuvre.

Dans l'exemple décrit ici, on considérera que :
- le service S1 de téléphonie sur RTC peut être accédé par tout terminal ayant des capacités à gérer les types de communication « Voix » ;
- le service S2, fonctionnant sur réseau IP, peut être accédé par tout terminal ayant des capacités à gérer les types de communication « Voix », « Texte» ou « Vidéo » ;
- le service S3 de messagerie instantanée peut être accédé par tout terminal ayant des capacités à gérer les types de communication « Voix », « Texte » ou « Vidéo »;
- le service S4 de messagerie instantanée peut être accédé par tout terminal ayant des capacités à gérer les types de communication « Texte »; et
- le service S5 GSM peut être accédé par tout terminal ayant des capacités à gérer les types de communication « Voix » et « Texte ».

Dans le mode préféré de réalisation décrit ici, le dispositif selon l'invention comprend des moyens 16 de mémorisation de données (mémoire, disque dur, etc), dans lesquels sont stockées des données utiles à la gestion des appels.

Les moyens 16 de mémorisation comprennent notamment une table de terminaux TT décrivant, pour chacun des terminaux T1 à T5, les capacités de ces terminaux, leurs adresses, leur disponibilités, et une information selon laquelle ils sont ou non utilisés par les utilisateurs A et B.

Dans l'exemple décrit ici, cette table TT a le contenu suivant :

**Table de terminaux TT**

| | A | B | Dispo | Capacités | | | | @ |
|---|---|---|---|---|---|---|---|---|
| | | | | Voix | IM | SMS | Vidéo | |
| T1 | 1 | 0 | 1 | 1 | 1 | 0 | 0 | @T1 |
| T2 | 1 | 1 | 1 | 1 | 0 | 0 | 0 | @T2 |
| T3 | 0 | 1 | 1 | 1 | 0 | 0 | 1 | @T3 |
| T4 | 0 | 1 | 1 | 1 | 0 | 0 | 1 | @T4 |
| T5 | 1 | 1 | 0 | 1 | 0 | 1 | 0 | @T5 |

Cette table comporte cinq lignes, une pour chacun des terminaux T1 à T5 des utilisateurs A et B.

Dans chacune de ces lignes on trouve les informations suivantes :
- le nom du terminal (T1 à T5) ;
- une valeur binaire égale à 1 si ce terminal est utilisé par l'utilisateur A et égale à 0 dans le cas contraire ;
- une valeur binaire égale à 1 si ce terminal est utilisé par l'utilisateur B et égale à 0 dans le cas contraire ;
- une valeur binaire égale à 1 si ce terminal est disponible et égale à 0 dans le cas contraire ;
- une valeur binaire égale à 1 si ce terminal supporte le type de communication « Voix » et égale à 0 dans le cas contraire ;
- une valeur binaire égale à 1 si ce terminal supporte le type de communication « IM » et égale à 0 dans le cas contraire ;
- une valeur binaire égale à 1 si ce terminal supporte le type de communication « SMS » et égale à 0 dans le cas contraire ;
- une valeur binaire égale à 1 si ce terminal supporte le type de communication « Vidéo » et égale à 0 dans le cas contraire ; et
- une adresse permettant au serveur proxy 10 de joindre ce terminal.

En variante, l'état de disponibilité d'un utilisateur sur un terminal n'est pas codée de manière binaire, mais avec différents niveaux comme cela se pratique pour les outils de messagerie instantanée: "disponible", "présent", "ne pas déranger", "non connecté", etc...

En variante, l'état de disponibilité d'un utilisateur est codé en prenant en compte les différents services de communication pour lesquels il possède un compte. Un utilisateur peut être disponible sur un service et pas sur un autre.

Toute autre variante ou combinaison entre ces variantes est envisageable.

Préférentiellement, ces informations de disponibilité d'utilisateur et/ou de terminal sont automatiquement mises à jour par le dispositif selon l'invention, en fonction des communications établies, des changements d'état de disponibilité dans les services de communication (notamment messagerie instantanée) et des informations de gestion de connexion obtenues à partir des modules de communication CL2 à CL5.

Dans l'exemple décrit ici, les moyens 16 de mémorisation comportent une table de services TS mémorisant, pour chacun des utilisateurs A et B, et pour chacun des contacts D et E de ces utilisateurs, au moins un compte de ces utilisateurs A et B associé à un service de communication.

Dans l'exemple décrit ici, cette table TS est la suivante :

**Table de services TS**

| | S1 | | S2 | | S3 | | S4 | | S5 | |
|---|---|---|---|---|---|---|---|---|---|---|
| A | A-S1 | 1 | A-S2 | 1 | A-S3 | 0 | A-S4 | 1 | | |
| B | B-S1 | 1 | B-S2 | 0 | B-S3 | 1 | | | | |
| D | D-S1 | 1 | D-S2 | 1 | D-S3 | 0 | | | D-S5 | 1 |
| E | E-S1 | 1 | E-S2 | 0 | | | | | | |

Lorsqu'un utilisateur A, B ou un contact D, E possède un compte pour accéder à l'un de ces services S1 à S5, ce compte est mémorisé dans la table TS.

Par exemple, l'homme du métier comprendra à la lecture de cette table, que le contact D possède un compte D-S1 pour le service S1, un compte D-S2 pour le service S2, un compte D-S3 pour le service S3, un compte D-S5 pour le service S5 mais qu'il ne possède pas de compte pour le service S4.

Dans le mode préféré de réalisation décrit ici, la table TS mémorise également une valeur binaire égale à 1 si un utilisateur est joignable sur un service et égale à 0 dans le cas contraire.

Par exemple, l'homme du métier comprendra que l'utilisateur B est joignable sur les services S1 et S3 mais non joignable via le service S2.

### Gestion des appels sortants

Le dispositif de gestion d'appels du serveur proxy 10 est adapté à recevoir par les interfaces de communication 11 à 14, en provenance du téléphone analogique T5 ou du client léger SIP d'un terminal T1 à T4, une requête pour joindre un contact D sélectionné, au moyen d'une interface utilisateur appropriée par un utilisateur du terminal émetteur de la requête, dans la liste de contacts mémorisée dans la table TS.

Conformément à l'invention, le dispositif de gestion d'appels du serveur proxy 10 comporte des moyens pour sélectionner un service de communication au moyen duquel le contact sélectionné est joignable.

Dans le mode de réalisation décrit ici, ces moyens de sélection sont mis en oeuvre dans la couche fonctionnelle 18 du serveur proxy 10. Ces moyens de sélection utilisent pour sélectionner un service une règle SSS, dite règle de sélection de service pour appel sortant.

La règle SSS utilise un ou plusieurs des critères suivants:
- un critère de priorité entre plusieurs services de communication au moyen desquels le contact sélectionné est joignable,
- un critère de disponibilité du contact via le service de communication sélectionné,
- un critère de coût de communication des services de communication au moyen desquels le contact sélectionné est joignable.

Le critère de priorité est défini par exemple dans une table de priorité TP, stockées dans les moyens 16 de mémorisation.

Cette table TP comporte quatre colonnes en fonction du type de communication requis, à savoir les types « Voix », « IM », « SMS » et « Vidéo ».

**Table des priorités : TP**

| | Voix | Texte | Vidéo |
|---|---|---|---|
| S1 | 3 | | |
| S2 | 1 | 2 | 2 |
| S3 | 2 | 1 | 1 |
| S4 | | 4 | |
| S5 | 4 | 3 | |

Cette table de priorité TP résume les priorités pour l'utilisateur A. Bien entendu, le serveur proxy 10 selon l'invention peut comporter une table identique ou similaire pour l'autre utilisateur B et pour chacun des contacts D et E.

Cette table doit être lue de la façon suivante : lorsqu'un service initié par l'utilisateur A requiert une communication de type « Voix », le serveur proxy 10 selon l'invention sélectionne en priorité le service S2 de voix sur IP, en cas d'impossibilité le premier service S3 de messagerie instantanée, puis le service S1 de téléphonie sur RTC, puis le service S5 GSM.

Ces priorités qui constituent la règle de sélection de service sur appel sortant peuvent elles-mêmes être dépendantes de critères de coût.

Dans le mode préféré de réalisation décrit ici, la règle SSS de sélection de service sur appel sortant utilise en outre un critère relatif à l'état de disponibilité du contact D, une information binaire représentant cet état de disponibilité étant enregistrée dans une table pour chaque contact de la liste de contacts.

Ainsi, si dans le scénario mentionné ci-dessus, le contact est l'individu D, le serveur proxy 10 selon l'invention sélectionnera, en cas d'échec sur le service S2 de voix sur IP, le service S1 de téléphonie sur RTC, puis le service S5 GSM, le contact D étant injoignable par le premier service S3 de messagerie instantanée.

Lorsque la sélection de service utilise des critères de priorité pour sélectionner le service parmi les différents services au moyen desquels le contact destinataire de l'appel est joignable, c'est-à-dire les services pour lesquels le contact destinataire de l'appel possède un compte, la sélection du service pet être gérée automatiquement par le dispositif de gestion d'appel selon l'invention, l'utilisateur initiateur de l'appel n'ayant qu'à sélectionner un contact.

Selon une première alternative, l'utilisateur initiateur de l'appel peut sélectionner manuellement, au moyen d'une interface utilisateur appropriée, mise en oeuvre sur le terminal local T1 à T4, le service au moyen duquel il souhaite joindre un contact.

Selon une deuxième alternative, l'utilisateur initiateur de l'appel indique ses préférences sur le choix du service, indiquant par exemple le type de communication souhaité ou un ordre de préférence, le dispositif de gestion d'appels essayant en priorité de contacter ce contact au moyen d'un compte utilisateur associé à un service du type préféré de communication, par exemple à un service de messagerie instantanée, puis en cas d'échec au moyen d'un compte de voix sur IP, puis en cas de nouvel échec sur un téléphone GSM.

Par exemple, l'utilisateur pourra paramétrer le serveur proxy selon l'invention de façon à ce qu'il essaie, sur réception d'un signal d'appel sortant, de diriger cet appel vocal sur un des modules de communication supportant des communications de type "voix", puis, en cas d'échec, vers un autre module de communication supportant des communications de type "voix".

Dans un mode particulier de réalisation, la règle de sélection de service sur appel sortant utilise des critères de coût de communication des services de communication au moyen desquels le contact sélectionné est joignable. Ces critères de coût peuvent notamment prendre en compte l'heure à laquelle le signal d'appel sortant est reçu par le dispositif de gestion d'appels conforme à l'invention.

Dans un mode particulier de réalisation, la règle de sélection de service sur appel sortant peut interdire l'utilisation d'un service de communication donné pendant une plage donnée.

Dans un mode particulier de réalisation de l'invention, la règle de sélection de service sur appel sortant utilise des critères relatifs à l'état de disponibilité du contact pour sélectionner le service. Des informations sur la disponibilité d'un contact dans la liste de contacts sur chacun des services de communication peuvent être obtenues par le middleware en interrogeant le module de communication qui est associé à chacun de ces services et gère des informations sur l'état de disponibilité et/ou de connexion du contact. Les services de type "messagerie instantanée" notamment, gère de façon permanente des états de disponibilité des différents contacts.

### Gestion des appels entrants

Le dispositif de gestion d'appels du serveur proxy 10 est adapté à recevoir, en provenance d'un contact, un signal d'appel émis par un terminal distant T6 à T12 conformément à un service de communication, à destination d'un contact associé à au moins un utilisateur A d'au moins un des terminaux T1 à T5.

Conformément à l'invention, le dispositif de gestion d'appels du serveur proxy 10 comporte des moyens pour sélectionner, en fonction du service de communication au moyen duquel est reçu le signal d'appel, et d'une règle SST de sélection, au moins un terminal parmi les terminaux ayant pour utilisateur le ou les utilisateurs associés au contact A.

Dans le mode de réalisation décrit ici, ces moyens de sélection sont mis en oeuvre dans la couche fonctionnelle 18 du serveur proxy 10.

Ces moyens de sélections sont aptes à sélectionner au moins un terminal en fonction du service de communication au moyen duquel est reçu le signal d'appel, notamment en fonction du type de communication requis par le service associé à l'appel, et en fonction de la règle SST de sélection de terminal. Cette règle SST prend au moins en compte des données TT relatives aux capacités que possèdent lesdits terminaux pour la mise en oeuvre de services de communication.

Dans un mode de réalisation particulier, le serveur 10 mémorise des informations sur l'état de disponibilité des utilisateurs sur chacun des terminaux, et la règle SST de sélection de terminal utilise un critère relatif auxdites informations sur l'état de disponibilité des utilisateurs.

Par exemple, plusieurs utilisateurs peuvent être déclarés au proxy comme étant attachés/joignables sur un même terminal. Le proxy précisera alors le destinataire de la communication sur le terminal concerné, par exemple en utilisant une sonnerie distincte par utilisateur.

Dans le mode de réalisation décrit ici, cette règle SST de sélection de terminal est implémentée par les tables de services TS et de terminaux TT.

Par exemple, si un appel entrant destiné au contact A est reçu via un service S2 requérant un type de communication « Voix », le dispositif de gestion d'appels du serveur proxy 10 sélectionnera tout d'abord un terminal ayant la capacité à recevoir un appel de type « Voix » (voir table des terminaux TT).

Il sélectionnera ensuite un terminal, parmi les trois terminaux T1, T2 et T5 supportant un appel de type « Voix », au moyen duquel l'utilisateur A est joignable (voir table des terminaux TT).

Un appel entrant par le réseau RTC peut être traité de la même façon que s'il s'agissait d'un utilisateur d'un service de communications de téléphonie sur Internet, sauf que l'utilisateur est unique et il est traité comme enregistré sur tous les terminaux simultanément. Un profil de comportement pour les appels entrants associé à cet utilisateur peut être défini.

Le serveur est adapté pour, lorsque plusieurs terminaux ont été sélectionnés sur la base de la règle de sélection SST, envoyer un message de notification à chacun des terminaux sélectionnés, puis sélectionner, pour l'établissement de ladite liaison de communication, un terminal ayant répondu positivement à ladite notification.

En alternative, le serveur est adapté pour, lorsque plusieurs terminaux ont été sélectionnés, sélectionner parmi les terminaux sélectionnés un premier terminal en fonction d'une règle de préférence, puis envoyer un message de notification au premier terminal sélectionné, puis sélectionner un deuxième terminal, lorsque le premier terminal sélectionné n'a pas répondu à ladite notification.

Nous allons maintenant décrire en référence à la **figure 2** les principales étapes du procédé de gestion d'appels conforme à l'invention. Nous supposerons dans cet exemple que ce procédé est mis en oeuvre par le serveur proxy 10 décrit précédemment.

Au cours d'une première étape E10, le serveur proxy 10 reçoit un appel (requête ou signal d'appel) et teste si cet appel est un appel entrant ou un appel sortant.

S'il s'agit d'un appel entrant, le serveur proxy 10 sélectionne, au cours d'une étape E30 du procédé de gestion d'appels selon l'invention, au moins un terminal disponible ayant les capacités pour rendre ce service, à partir de la règle SST de sélection de terminal déjà décrite.

Cette sélection peut s'effectuer en utilisant la table des terminaux TT décrite précédemment.

Lorsque le terminal est sélectionné, le middleware émet un message de notification ou requête au terminal local sélectionné via l'interface de communication associée à ce terminal, en vue de l'établissement via le module de communication d'une liaison de communication entre le terminal sélectionné et le terminal distant.

Lorsque plusieurs terminaux sont sélectionnés, le middleware envoie un message de notification à chacun des terminaux sélectionnés, puis sélectionne, pour l'établissement de ladite liaison de communication, un terminal ayant répondu positivement à ladite notification.

En alternative, lorsque plusieurs terminaux sont sélectionnés, le middleware sélectionne parmi les terminaux sélectionnés un premier terminal en fonction d'une règle de préférence, puis envoie un message de notification au premier terminal sélectionné, et le cas échéant, sélectionne un deuxième terminal lorsque le premier terminal sélectionné n'a pas répondu à la notification.

Si, suite à une action d'un utilisateur d'un terminal sélectionné, celui-ci répond à la notification reçue, l'appel est transféré vers le terminal ayant répondu. Une liaison de communication est alors établie à l'étape E40 entre le terminal distant émetteur de l'appel et le terminal local sélectionné, via le module de communication récepteur de l'appel et via l'interface de communication associée au terminal local sélectionné. Cette liaison de communication permet de véhiculer un contenu (voix, vidéo, texte, etc...) entre ces deux terminaux.

Si à l'étape E10, il s'agit d'une requête, destinée à établir une communication sortante avec un contact D ou E sélectionné dans la liste de contacts du dispositif, le dispositif sélectionne, au cours d'une étape E50 du procédé de gestion des appels sortants conforme à l'invention, en fonction d'une règle SSS de sélection de service, un service de communication. Cette sélection s'effectue en utilisant les tables TP et TT décrites précédemment.

Lorsque le service de communication est sélectionné, le middleware identifie parmi les modules de communication du dispositif, un module de communication apte à établir une liaison de communication conforme au service sélectionné.

Il émet alors une requête au module de communication identifié, en vue de l'établissement via le module de communication identifié d'une liaison de communication entre le terminal de l'utilisateur émetteur du signal d'appel et un autre terminal distant au moyen duquel le contact sélectionné est joignable au moyen du service sélectionné.

Une liaison de communication est ensuite établie à l'étape E60 entre ces deux terminaux, via le module de communication identifié et via l'interface de communication réceptrice du signal d'appel. Cette liaison de communication permet de véhiculer un contenu (voix, vidéo, texte, etc...) entre ces deux terminaux.

## Revendications

1. Dispositif de gestion d'appels pour le compte d'une pluralité de terminaux locaux (T1-T5), ce dispositif comportant :
- une interface (11-15) de communication avec chacun desdits terminaux locaux (T1-T5) ;
- une pluralité de modules (CL2-CL5) clients de communication, chacun étant apte à établir, à travers un réseau de communication, avec au moins un terminal distant (T6-T10), une liaison de communication conforme à un service de communication; et
- des moyens (18) de routage pour :
- en cas de réception par un des modules clients de communication d'un appel entrant en provenance d'un terminal distant émetteur, sélectionner parmi ladite pluralité de terminaux locaux au moins un terminal local apte à recevoir ledit appel et rediriger ledit appel vers l'interface de communication avec le terminal local sélectionné, en vue de l'établissement, à travers le module client de communication récepteur de l'appel, d'une liaison de communication entre ledit terminal distant émetteur et le terminal local sélectionné; et
- en cas de réception d'une requête d'appel sortant par une interface de communication avec un terminal local émetteur, identifier un module client de communication apte à établir une voie de communication conforme à un service de communication sélectionné et transmettre la requête vers le module client de communication identifié, en vue de l'établissement, à travers le module client de communication identifié, d'une liaison de communication conforme au service sélectionné entre un terminal distant destinataire et le terminal local émetteur ;
le dispositif de gestion d'appels étant **caractérisé en ce qu'**il utilise, pour établir la partie de la liaison de communication entre ledit dispositif de gestion et un terminal local quelconque de la pluralité de terminaux locaux, un protocole de signalisation unique, indépendant du service de communication correspondant à la liaison de communication et donc du module client de communication associé via lequel cette liaison est établie ;
le dispositif de gestion d'appels comportant des moyens (18) de conversion pour convertir des premières données conformes à un protocole de transport générique propre à un type de communication supporté par les terminaux locaux en des deuxièmes données conformes à un protocole de communication particulier du même type utilisé pour un service de communication donné associé à un module client de communication, ou vice versa ;
le protocole de transport générique étant compatible avec le protocole de signalisation unique utilisé.

2. Dispositif de gestion selon la revendication 1, dans lequel le protocole de signalisation unique est le protocole SIP.

3. Dispositif de gestion selon la revendication 1 ou 2, **caractérisé en ce qu'**il comprend des moyens de sélection de service, pour, dans le cas d'un appel sortant, sélectionner un service en fonction d'au moins un critère choisi parmi un critère de coût et un critère de disponibilité d'un contact (D) utilisateur dudit terminal distant.

4. Dispositif de gestion selon l'une quelconque des revendications 1 à 3, **caractérisé en ce qu'**il comprend des moyens de sélection de terminal, pour, dans le cas d'un appel entrant, sélectionner un terminal en fonction d'une règle (SST) de sélection de terminal prenant en compte des données (TT) relatives aux capacités que possèdent lesdits terminaux locaux (T1-T4) pour la mise en oeuvre de services de communication.

5. Dispositif de gestion selon la revendication 4, **caractérisé en ce que** ladite règle (SST) de sélection de terminal utilise au moins un critère parmi un critère de disponibilité desdits terminaux locaux (T1-T5) et un critère de disponibilité des utilisateurs desdits terminaux locaux (T1-T5).

6. Dispositif de gestion selon l'une quelconque des revendications 1 à 5, **caractérisé en ce qu'**il comporte des moyens pour envoyer, dans le cas d'un appel entrant, un message de notification à un ou à chacun des terminaux locaux sélectionnés, lesdits moyens (18) de routage sélectionnant effectivement ledit terminal local ayant répondu positivement à ladite notification.

7. Dispositif de gestion selon la revendication 6, **caractérisé en ce que** ledit message de notification est envoyé à ladite pluralité de terminaux locaux, selon un ordre établi en fonction d'une règle de préférence.

8. Serveur proxy (10) comportant un dispositif de gestion selon l'une quelconque des revendications 1 à 7.

9. Procédé de gestion d'appels pour le compte d'une pluralité de terminaux locaux (T1-T5), ce procédé étant mis en oeuvre par un dispositif de gestion d'appels comprenant une interface (11-15) de communication avec chacun desdits terminaux locaux (T1-T5) et une pluralité de modules (CL2-CL5) clients de communication associés chacun à au moins un service de communication, le procédé comportant :
- suite à la réception par un des modules clients de communication d'un appel entrant en provenance d'un terminal distant émetteur, une étape (E30) de sélection d'au moins un terminal local (T1-T5) et une étape de redirection dudit appel vers une interface (11-15) de communication avec le terminal local sélectionné, en vue de l'établissement, à travers le module client de communication récepteur de l'appel, d'une liaison de communication entre ledit terminal distant émetteur et le terminal local sélectionné; et
- suite à la réception d'une requête d'appel sortant par une interface de communication avec un terminal local émetteur, une étape (E50) d'identification d'un module client de communication apte à établir une liaison de communication conforme à un service de communication sélectionné, et une étape (E60) de transmission d'une requête vers le module (CL2-CL5) de communication identifié, en vue de l'établissement, à travers le module client de communication identifié, d'une liaison de communication entre un terminal distant destinataire et le terminal local émetteur ;
le procédé étant **caractérisé en ce que** le dispositif de gestion d'appels utilise, pour établir la partie de la liaison de communication entre ledit dispositif de gestion et un terminal local quelconque de la pluralité de terminaux locaux, un protocole de signalisation unique, indépendant du service de communication correspondant à la liaison de communication et donc du module client de communication associé via lequel cette liaison est établie ;
le procédé comprenant une étape de conversion, par des moyens de conversion du dispositif de gestion, de premières données conformes à un protocole de transport générique propre à chaque type de communication supporté par les terminaux locaux en des deuxièmes données conformes à un protocole de communication particulier du même type utilisé pour un service de communication donné associé à un module client de communication, ou vice versa ;
le protocole de transport générique étant compatible avec le protocole de signalisation unique utilisé.

10. Programme d'ordinateur comportant des instructions pour l'exécution des étapes du procédé de gestion d'appel selon la revendication 9 lorsque ledit programme est exécuté par un ordinateur.

11. Support d'enregistrement lisible par un ordinateur sur lequel est enregistré un programme d'ordinateur comprenant des instructions pour l'exécution des étapes du procédé de gestion d'appel selon la revendication 9.

## Patentansprüche

1. Vorrichtung zur Verwaltung von Anrufen im Auftrag einer Vielzahl von lokalen Endgeräten (T1-T5), wobei diese Vorrichtung umfasst:
- eine Kommunikationsschnittstelle (11-15) zu jedem der lokalen Endgeräte (T1-T5);
- eine Vielzahl von Kommunikations-Client-Modulen (CL2-CL5), von denen jedes geeignet ist, über ein Kommunikationsnetzwerk zu mindestens einem entfernten Endgerät (T6-T10) eine einem Kommunikationsdienst entsprechende Kommunikationsverbindung aufzubauen, und
- Routingmittel (18), um:
- im Fall des Empfangens eines eingehenden, von einem sendenden entfernten Endgerät kommenden Anrufs durch eines der Kommunikations-Client-Module unter der Vielzahl von lokalen Endgeräten mindestens ein lokales Endgerät auszuwählen, das geeignet ist, den Anruf zu empfangen, und den Anruf zu der Kommunikationsschnittstelle zu dem ausgewählten lokalen Endgerät weiterzuleiten, um über das den Anruf empfangende Kommunikations-Client-Modul eine Kommunikationsverbindung zwischen dem sendenden entfernten Endgerät und dem ausgewählten lokalen Endgerät aufzubauen, und
- im Fall des Empfangens einer Anforderung eines abgehenden Anrufs durch eine Kommunikationsschnittstelle zu einem sendenden lokalen Endgerät ein Kommunikations-Client-Modul zu identifizieren, das geeignet ist, einen einem ausgewählten Kommunikationsdienst entsprechenden Kommunikationskanal aufzubauen und die Anforderung zu dem identifizierten Kommunikations-Client-Modul zu übertragen, um über das identifizierte Kommunikations-Client-Modul eine dem ausgewählten Kommunikationsdienst entsprechende Kommunikationsverbindung zwischen einem entfernten Zielendgerät und dem sendenden lokalen Endgerät aufzubauen;
wobei die Vorrichtung zur Anrufverwaltung **dadurch gekennzeichnet ist, dass** sie zum Aufbauen des Teils der Kommunikationsverbindung zwischen der Verwaltungsvorrichtung und einem beliebigen lokalen Endgerät der Vielzahl von lokalen Endgeräten unabhängig von dem der Kommunikationsverbindung entsprechenden Kommunikationsdienst und somit von dem zugeordneten Kommunikations-Client-Modul, über welches diese Verbindung aufgebaut wird, ein einziges Signalisationsprotokoll verwendet;
wobei die Vorrichtung zur Anrufverwaltung Konversionsmittel (18) umfasst, um erste Daten, die einem spezifischen generischen Transportprotokoll einer von den lokalen Endgeräten unterstützten Kommunikationsart entsprechen, in zweite Daten, die einem besonderen Kommunikationsprotokoll derselben Art entsprechen, wie es für einen gegebenen, einem Kommunikations-Client-Modul zugeordneten Kommunikationsdienst verwendet wird, zu konvertieren oder umgekehrt;
wobei das generische Transportprotokoll mit dem verwendeten einzigen Signalisationsprotokoll kompatibel ist.

2. Vorrichtung zur Verwaltung nach Anspruch 1, wobei das einzige Signalisationsprotokoll das Protokoll SIP ist.

3. Vorrichtung zur Verwaltung nach Anspruch 1 oder 2, **dadurch gekennzeichnet, dass** sie Dienstauswahlmittel umfasst, um im Fall eines abgehenden Anrufs einen Dienst in Abhängigkeit von mindestens einem Kriterium auszuwählen, das unter einem Kostenkriterium und einem Verfügbarkeitskriterium eines das entfernte Endgerät nutzenden Kontakts (D) gewählt wird.

4. Vorrichtung zur Verwaltung nach einem der Ansprüche 1 bis 3, **dadurch gekennzeichnet, dass** sie Endgeräteauswahlmittel umfasst, um im Fall eines eingehenden Anrufs ein Endgerät in Abhängigkeit von einer Endgeräteauswahlregel (SST) auszuwählen, die Daten (TT) bezüglich der Kapazitäten berücksichtigt, die die lokalen Endgeräte (T1-T4) zur Durchführung von Kommunikationsdiensten besitzen.

5. Vorrichtung zur Verwaltung nach Anspruch 4, **dadurch gekennzeichnet, dass** die Endgeräteauswahlregel (SST) mindestens ein Kriterium unter einem Verfügbarkeitskriterium der lokalen Endgeräte (T1-T5) und einem Verfügbarkeitskriterium der Nutzer der lokalen Endgeräte (T1-T5) verwendet.

6. Vorrichtung zur Verwaltung nach einem der Ansprüche 1 bis 5, **dadurch gekennzeichnet, dass** sie Mittel umfasst, um im Fall eines eingehenden Anrufs eine Benachrichtigungsnachricht an eines oder an jedes der ausgewählten lokalen Endgeräte zu senden, wobei die Routingmittel (18) tatsächlich dasjenige lokale Endgerät auswählen, das auf die Benachrichtigung positiv geantwortet hat.

7. Vorrichtung zur Verwaltung nach Anspruch 6, **dadurch gekennzeichnet, dass** die Benachrichtigungsnachricht an die Vielzahl von lokalen Endgeräten in einer Reihenfolge gesendet wird, die in Abhängigkeit von einer Präferenzregel aufgebaut wird.

8. Proxy-Server (10), umfassend eine Vorrichtung zur Verwaltung nach einem der Ansprüche 1 bis 7.

9. Verfahren zur Verwaltung von Anrufen im Auftrag einer Vielzahl von lokalen Endgeräten (T1-T5), wobei dieses Verfahren von einer Vorrichtung zur Anrufverwaltung durchgeführt wird, die eine Kommunikationsschnittstelle (11-15) zu jedem der lokalen Endgeräte (T1-T5) und eine Vielzahl von Kommunikations-Client-Modulen (CL2-CL5), die jeweils mindestens einem Kommunikationsdienst zugeordnet sind, umfasst, wobei das Verfahren umfasst:
- nach dem Empfangen eines eingehenden, von einem sendenden entfernten Endgerät kommenden Anrufs durch eines der Kommunikations-Client-Module einen Schritt (E30) des Auswählens mindestens eines lokalen Endgeräts (T1-T5) und einen Schritt des Weiterleitens des Anrufs zu einer Kommunikationsschnittstelle (11-15) zu dem ausgewählten lokalen Endgerät, um über das den Anruf empfangende Kommunikations-Client-Modul eine Kommunikationsverbindung zwischen dem sendenden entfernten Endgerät und dem ausgewählten lokalen Endgerät aufzubauen, und
- nach dem Empfangen einer Anforderung eines abgehenden Anrufs über eine Kommunikationsschnittstelle zu einem sendenden lokalen Endgerät einen Schritt (E50) des Identifizierens eines Kommunikations-Client-Moduls, das geeignet ist, eine einem ausgewählten Kommunikationsdienst entsprechende Kommunikationsverbindung aufzubauen, und einen Schritt (E60) des Übertragens einer Anforderung zu dem identifizierten Kommunikations-Client-Modul (CL2-CL5), um über das identifizierte Kommunikations-Client-Modul eine Kommunikationsverbindung zwischen einem entfernten Zielendgerät und dem lokalen sendenden Endgerät aufzubauen;
wobei das Verfahren **dadurch gekennzeichnet ist, dass** die Vorrichtung zur Anrufverwaltung zum Aufbauen des Teils der Kommunikationsverbindung zwischen der Verwaltungsvorrichtung und einem beliebigen lokalen Endgerät der Vielzahl von lokalen Endgeräten unabhängig von dem der Kommunikationsverbindung entsprechenden Kommunikationsdienst und somit von dem zugeordneten Kommunikations-Client-Modul, über welches diese Verbindung aufgebaut wird, ein einziges Signalisationsprotokoll verwendet;
wobei das Verfahren einen Schritt der Konversion, über Konversionsmittel der Verwaltungsvorrichtung, von ersten Daten, die einem spezifischen generischen Transportprotokoll einer von den lokalen Endgeräten unterstützten Kommunikationsart entsprechen, in zweite Daten, die einem besonderen Kommunikationsprotokoll derselben Art entsprechen, wie es für einen gegebenen, einem Kommunikations-Client-Modul zugeordneten Kommunikationsdienst verwendet wird, oder umgekehrt umfasst,
wobei das generische Transportprotokoll zu dem verwendeten einzigen Signalisationsprotokoll kompatibel ist.

10. Computerprogramm mit Anweisungen zum Ausführen der Schritte des Verfahrens zur Anrufverwaltung nach Anspruch 9, wenn das Programm von einem Computer ausgeführt wird.

11. Computerlesbares Speichermedium, auf dem ein Computerprogramm gespeichert ist, das Anweisungen zum Ausführen der Schritte des Verfahrens zur Anrufverwaltung nach Anspruch 9 umfasst.

## Claims

1. Device for managing calls on behalf of a plurality of local terminals (T1-T5), this device including:
- an interface (11-15) for communicating with each of said local terminals (T1-T5);
- a plurality of client communication modules (CL2-CL5), each being able to set up, through a communication network, with at least one remote terminal (T6-T10), a communication link compliant with a communication service; and
- routing means (18) for:
- in the case of receipt, by one of the client communication modules, of an incoming call originating from a remote sending terminal, selecting, from among said plurality of local terminals, at least one local terminal able to receive said call and redirecting said call to the interface for communicating with the selected local terminal, for the purpose of setting up, through the client communication module receiving the call, a communication link between said remote sending terminal and the selected local terminal; and
- in the case of receipt of an outgoing call request by an interface for communicating with a local sending terminal, identifying a client communication module able to set up a communication channel compliant with a selected communication service and transmitting the request to the identified client communication module, for the purpose of setting up, through the identified client communication module, a communication link, compliant with the selected service, between a remote recipient terminal and the local sending terminal;
the call management device being **characterized in that** it uses, to set up the portion of the communication link between said management device and an arbitrary local terminal from the plurality of local terminals, a single signalling protocol that is independent of the communication service corresponding to the communication link and therefore of the associated client communication module via which this link is set up;
the call management device including conversion means (18) for converting first data compliant with a generic transport protocol specific to a type of communication supported by the local terminals into second data compliant with a particular communication protocol of the same type used for a given communication service associated with a client communication module, or *vice versa;*
the generic transport protocol being compatible with the single signalling protocol used.

2. Management device according to Claim 1, wherein the single signalling protocol is the SIP protocol.

3. Management device according to Claim 1 or 2, **characterized in that** it comprises service selection means for, in the case of an outgoing call, selecting a service depending on at least one criterion chosen from among a cost criterion and a criterion of availability of a contact (D) using said remote terminal.

4. Management device according to any one of Claims 1 to 3, **characterized in that** it comprises terminal selection means for, in the case of an incoming call, selecting a terminal depending on a terminal selection rule (SST) taking account of data (TT) relating to the capabilities possessed by said local terminals (T1-T4) to implement communication services.

5. Management device according to Claim 4, **characterized in that** said terminal selection rule (SST) uses at least one criterion from among a criterion of availability of said local terminals (T1-T5) and a criterion of availability of the users of said local terminals (T1-T5).

6. Management device according to any one of Claims 1 to 5, **characterized in that** it includes means for sending, in the case of an incoming call, a notification message to one or to each of the selected local terminals, said routing means (18) effectively selecting said local terminal that responded affirmatively to said notification.

7. Management device according to Claim 6, **characterized in that** said notification message is sent to said plurality of local terminals in an order established depending on a preference rule.

8. Proxy server (10) including a management device according to any one of Claims 1 to 7.

9. Method for managing calls on behalf of a plurality of local terminals (T1-T5), this method being implemented by a call management device comprising an interface (11-15) for communicating with each of said local terminals (T1-T5) and a plurality of client communication modules (CL2-CL5) each associated with at least one communication service, the method including:
- following the receipt, by one of the client communication modules, of an incoming call originating from a remote sending terminal, a step (E30) of selecting at least one local terminal (T1-T5) and a step of redirecting said call to an interface (11-15) for communicating with the selected local terminal, for the purpose of setting up, through the client communication module receiving the call, a communication link between said remote sending terminal and the selected local terminal; and
- following the receipt of an outgoing call request by an interface for communicating with a local sending terminal, a step (E50) of identifying a client communication module able to set up a communication link compliant with a selected communication service, and a step (E60) of transmitting a request to the identified communication module (CL2-CL5), for the purpose of setting up, through the identified client communication module, a communication link between a remote recipient terminal and the local sending terminal;
the method being **characterized in that** the call management device uses, to set up the portion of the communication link between said management device and an arbitrary local terminal from the plurality of local terminals, a single signalling protocol that is independent of the communication service corresponding to the communication link and therefore of the associated client communication module via which this link is set up;
the method comprising a step of converting, using conversion means of the management device, first data compliant with a generic transport protocol specific to each type of communication supported by the local terminals into second data compliant with a particular communication protocol of the same type used for a given communication service associated with a client communication module, or *vice versa;*
the generic transport protocol being compatible with the single signalling protocol used.

10. Computer program including instructions for executing the steps of the call management method according to Claim 9 when said program is executed by a computer.

11. Computer-readable recording medium on which a computer program comprising instructions for executing the steps of the call management method according to Claim 9 is recorded.
